# EUROPÄISCHE PATENTSCHRIFT

(11) **EP 1 588 533 B1**
(45) Veröffentlichungstag und Bekanntmachung des Hinweises auf die Patenterteilung: **21.06.2006**
(21) Anmeldenummer: 03789402.9
(22) Anmeldetag: 23.12.2003
(51) Int. Cl.: H04L 29/06, H04L 12/28, H04L 1/16

(54) **SYSTEM UND VERFAHREN ZUR VERBESSERUNG DES ÜBERTRAGUNGSVERHALTENS EINER NACH DEM TCP/IP-PROTOKOLL ARBEITENDEN DATENÜBERTRAGUNG ÜBER EINE UNIDIREKTIONALE FUNKVERBINDUNG**
SYSTEM AND METHOD FOR IMPROVING THE TRANSMISSION PROPERTIES OF A DATA TRANSMISSION OPERATING WITH THE TCP/IP PROTOCOL BY MEANS OF A MONO-DIRECTIONAL RADIO CONNECTION
SYSTEME ET PROCEDE D'AMELIORATION DU COMPORTEMENT DE TRANSMISSION D'UNE TRANSMISSION DE DONNEES FONCTIONNANT SELON LE PROTOCOLE TCP/IP PAR UNE RADIO LIAISON UNIDIRECTIONNELLE

(30) Priorität: 29.01.2003 DE 10303488
(43) Veröffentlichungstag der Anmeldung: 26.10.2005
(73) Patentinhaber: Rohde & Schwarz FTK GmbH, 12557 Berlin (DE)
(72) Erfinder: SCHWIERTZ, Jacek, 12353 Berlin (DE); ZUREK-TERHARDT, Günther, 15566 Schöneiche (DE)
(74) Vertreter: Körfer, Thomas
(86) Internationale Anmeldenummer: PCT/EP2003/014819
(87) Internationale Veröffentlichungsnummer: WO 2004/068793

(56) Entgegenhaltungen:
- EP-A- 1 061 699
- DE-A- 19 910 023

## Beschreibung

Die Erfindung betrifft ein System und ein Verfahren zur Verbesserung des Übertragungsverhaltens einer nach dem TCP/IP-Protokoll arbeitenden Datenübertragung über eine unidirektionale Funkverbindung.

Der Wunsch nach individueller und technisch hochwertiger Information und Unterhaltung in den Darstellungsformen Text, Bild, Video und Audio ist im heutigen Unterhaltungsmarkt unverkennbar. Die heute verfügbaren Internetbasierten digitalen Übertragungssysteme besitzen die Voraussetzung, diese Anforderungen zu erfüllen. Der interaktive Zugriff auf das Informationsangebot im Internet - in all den genannten Darstellungsformen - ist heute Stand der Technik. Hinzukommt, dass die heutigen breitbandigen, digitalen Übertragungssysteme die Möglichkeit bieten, datenintensive Unterhaltungsangebote von Anbietern im Internet für eine hochwertige Wiedergabequalität beim Konsumenten verlust- und verzögerungsfrei zu übertragen. Als breitbandiges Übertragungsmedium für Netzteilnehmer in geographisch abgelegenen Gebieten wird sich die digitale Rundfunktechnik (DVB-T, DAB) als kostengünstigere Alternative zur Datenübertragung über ein kabelgebundenes Netzwerk verstärkt etablieren.

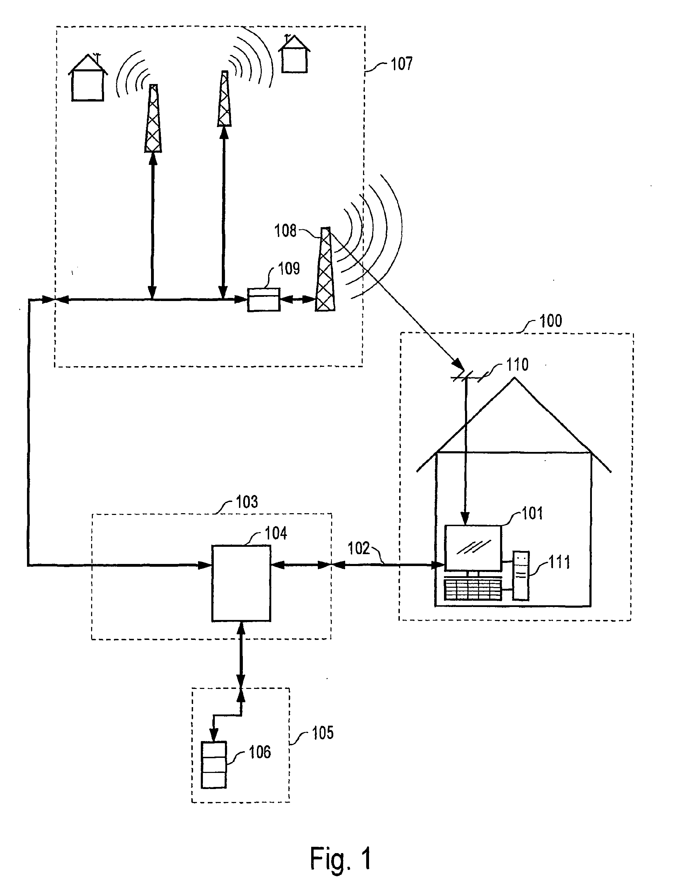

Das digitale Internet-unterstützte terrestrische Fernsehen (DTT-IP) bietet hier den geeigneten Standard, um hochwertige Qualität im Audio- und Video-Bereich wie auch bei zusätzlichen digitalen Informationsdiensten zu preislich vorteilhaften Konditionen anzubieten. Der prinzipielle Aufbau des digitalen Internet-gestützten terrestrischen Fernsehens (DTT-IP) ist in Fig. 1 dargestellt. Der Endnutzer 100 meldet sich von seinem als Client arbeitenden Personal Computer 101 über das digitale Telefonnetz (ISDN-Netz) 102 bei seinem Internet-Service-Provider 103 an. Nach erfolgreicher Anmeldung wird er von diesem über sogenannte Router (Access Router) 104 in das Internet 105 frei geschaltet und erhält die Möglichkeit auf das auf unterschiedlichsten Servern im Internet gespeicherte Informationsangebot - Text, Bild, Video, Audio usw. - zuzugreifen. Befindet sich der Endnutzer 100 in einem Bereich, in dem er von einer Sendeantenne 108, die digitales Fernsehen ausstrahlt, empfangen kann, und bietet sein Internet-Service-Provider 103 den Dienst DTT-IP an, so kann der Endnutzer die datenintensiven Dienste über diesen Funkkanal empfangen. Die nach dem TCP/IP-Protokoll strukturierten Datenpakete werden unter Zwischenschaltung des Internet-Service-Providers 103 über entsprechende Router 104 an das Netzwerk des digitalen Internet-gestützten terrestrischen Fernsehens (DTT-IP-Netzwerk) 107 weitergeschaltet.

Dieses DTT-IP-Netzwerk 107 stellt ein zelluläres Netz dar. Die vom End-Nutzer im Internet ausgewählten Datenpakete werden über das DTT-IP-Netzwerk 107 an die dem End-Nutzer 100 nächstgelegenste Sendeantenne 108 durch Adressierung der Datenpakete an das der Sendeantenne 108 zugehörige DTT-IP-Gateway 109 zugeleitet. Die von der Sendeantenne 108 z.B. im UHF-Frequenzband ausgestrahlten digitalen Daten beinhalten auch die vom End-Nutzer 100 ausgewählten Datenpakete. Diese werden von der Hausantenne 110 des End-Nutzers 100 empfangen. Die im Personal-Computer 101 des End-Nutzers 100 installierte DTT-Empfangskarte 111 selektiert aus dem von der Hausantenne empfangenen Signal daraufhin nur die Datenpakete, die für den End-Nutzer 100 bestimmt sind.

Die digitale Rundfunktechnik, die im Vergleich zur drahtgebundenen Übertragungstechnik Vorteile - Kostenvorteile, hohe Übertragungskapazitäten, Mobilität des Empfängers usw. - aufweist, ist mit vergleichsweise höheren Übertragungsverlusten behaftet. Treten in einem Übertragungskanal eines Internet-gestützten, nach dem TCP/IP-Protokoll arbeitenden Übertragungssystems Übertragungsverluste auf, so werden diese von der TCP-Protokollschicht verarbeitet. Hierzu wird vom Client auf der TCP-Protokollschicht eine erneute Übertragung der verlustbehafteten oder verloren gegangenen Nachricht vom absendenden Server angefordert und somit die Übertragungsgeschwindigkeit der Kommunikation zwischen den an der verlustbehafteten Übertragungsstrecke beteiligten Servern entsprechend der Höhe der Datenverluste reduziert. Somit regelt sich die Geschwindigkeit der Datenübertragung nach dem TCP/IP-Verfahren automatisch auf eine ausreichende Datenübertragungsqualität ein. Zur Gewährleistung einer zuverlässigen Datenübertragung werden bei reduzierter Datenübertragungsgeschwindigkeit die zu übertragenden Datenpakete in sogenannten TCP-Datenpuffern auf den Servern zwischengespeichert.

Die Fehlerbehandlung auf der TCP-Protokoll-Ebene bewirkt für den Netzbeteiligten Performance-Verluste in zweifacher Hinsicht. Neben der erwähnten definierten Reduzierung der Datenübertragungsgeschwindigkeit bei auftretenden Datenverlust kommen zusätzliche Geschwindigkeitsverluste aufgrund der Tatsache hinzu, daß die Fehlerbehandlung innerhalb des TCP/IP-Protokoll-Mechanismus zeitlich verzögert zur erstmaligen Fehlerkennung durchgeführt wird. Da Übertragungsfehler bei einem nach dem OSI-Referenzmodell arbeitenden Übertragungssystem bereits in der Sicherungs- bzw. Vermittlungsschicht erkannt werden, entsteht durch die Fehlerbehandlung in der höheren TCP- oder Transport-Schicht ein zusätzlicher Performance-Verlust.

Der Geschwindigkeitsverlust aufgrund der Fehlerbehandlung in der TCP-Protokollschicht kann dagegen bei beibehaltener Übertragungstechnik durch eine ausgereiftere Fehlerbehandlung in den verschiedenen Protokollschichten reduziert werden.

In der DE 199 10 023 A1 ist ein Datenübertragungssystem zwischen einem Server A und einem Client B beschrieben, die beide nach dem TCP/IP-Protokoll-Standard eine Kommunikation betreiben. Zur Reduzierung des Übertragungsaufwandes auf der Übertragungsstrecke sind dem Server A ein Endgerät E1 und dem Client B ein Endgerät E2 vorgeschaltet. Im Falle eines Übertragungsfehler sind in den Endgeräten E1 und E2 Datenpuffer vorgesehen, in die bei Auftreten eines Übertragungsfehlers die wiederholt zu übertragenden Datenpakete vom Server A bzw. vom Client B geladen werden. Nachteilig an dieser Konfiguration ist die Tatsache, dass alle Datenpakete vor ihrer Aussendung in die Datenpuffer der Endgeräte E1 bzw. E2 geschrieben werden. Hierdurch entstehen zusätzliche Übertragungszeiten.

Der Erfindung liegt also die Aufgabe zugrunde, ein System und ein Verfahren zu schaffen, die bei einer Internet-gestützten Datenübertragung in einem unidirektionalen Funkkanal verstärkt auftretenden Datenverluste durch einen schnellen Zugriff auf die wiederholt zu übertragenden Datenpakete im Hinblick auf eine geschwindigkeitsoptimale Datenübertragung zu behandeln.

Die Aufgabe wird hinsichtlich des Systems durch die Merkmale des Anspruchs 1 und hinsichtlich des Verfahrens durch die Merkmale des Anspruchs 13 gelöst.

Im Gegensatz zum Stand der Technik, bei dem im Falle eines Datenverlusts im Übertragungskanal die Fehlerbehandlung durch erneutes Übertragen der verlustbehafteten oder verloren gegangenen Nachricht auf der TCP-Protokollschicht erfolgt und somit sehr zeitaufwendig alle Protokollschichten bis zur TCP-Schicht auf Seiten des Servers wie auch des Clients durchlaufen werden müssen, setzt die Fehlerbehandlung bereits in der als Vermittlungsschicht wirkenden IP-Schicht ein. Von daher sind nicht nur die Datenpuffer des TCP/IP-Stacks des absendenden Servers und des empfangenden Clients wie bei einer in der TCP-Schicht durchgeführten Fehlerbehandlung, sondern auch die Datenpuffer der an der Datenübertragung beteiligten Netzknoten (Vermittlungsstellen, Router, Gateways etc.), zu berücksichtigen. Somit kann bei einer Datenübertragung über mehrere Netzknoten die Fehlerbehandlung auf die Übertragungsteilstrecke beschränkt werden, deren Empfangsnetzknoten eine fehlerhafte Übertragung identifiziert hat. Zusätzliche Zeitersparnis tritt durch die Beschränkung der Fehlerbehandlung auf die IP-Schicht ein, die eine zusätzliche zeitraubende Fehlerbearbeitung auf der TCP-Schicht vermeidet.

Für eine Datenübertragung über einen digitalen Funkkanal nach dem DTT-IP-Standard wird vorausgesetzt, daß die Funkübertragung - wie in Fig. 1 dargestellt - die letzte und einzige Übertragungsteilstrecke verkörpert, so dass für die Fehlerbehandlung die Datenpuffer der Vermittlungseinheit zwischen dem drahtgebunden DTT-IP-Netzwerk und der Funkübertragungsstrecke gemäß Fig. 1 und des empfangenden, als Client wirkenden Personal-Computers des End-Nutzers herangezogen werden.

Diese Datenpuffer dienen auf der Seite des Clients zur Auswertung der übertragenen Datenpakete hinsichtlich Vollständigkeit und Korrektheit der Gesamtnachricht und auf Seiten der Vermittlungseinheit zur Zwischenspeicherung der zuletzt abgesendeten Datenpakete für den Fall einer wiederholten Übertragung bei mißglückter Datenübertragung. Durch die Zwischenpufferung der bereits abgesendeten Datenpakete in einem sendernahen zyklischen Datenpuffer der Vermittlungseinheit kann bei einer in der IP-Schicht stattfindenden Fehlerbehandlung die wiederholte Datenübertragung zügig durchgeführt werden. Im Falle der Fehlerbehandlung auf der TCP-Ebene gemäß dem Stand der Technik müssen die Datenpakete der wiederholt zu versendenden Nachricht beim Server angefordert werden. Diese Anforderung kann erst nach dem Erkennen eines Verlustes ausgelöst werden. Der Verlust kann erst nach Ablauf eines von mehreren Kriterien abhängigen Zeitintervalls erkannt werden.

Ein weiterer Vorteil der in der IP-Schicht stattfindenden Fehlerbehandlung ist in der system- wie auch verfahrensspezifischen Möglichkeit zu sehen, die wiederholte Versendung genau auf diejenigen Datenpakete zu beschränken, die im ersten Übertragungsversuch verloren gegangen sind oder fehlerhaft übertragen wurden. Eine Fehlerbehandlung auf TCP-Ebene bewirkt eine wiederholte Übertragung der gesamten oder von Teilen der Nachricht mit all den dazugehörigen Datenpaketen zu.

Durch geeignete Wahl der Datenpuffergröße in der Vermittlungseinheit kann auch bei hoher Datenübertragungsrate und bei mehrmaliger fehlerhafter Übertragung des selben Datenpaketes eine wiederholte Übertragung des verloren gegangenen oder fehlerhaft übertragenen Datenpaketes und somit eine fehlerfreie Datenübertragung gewährleistet werden. Bei zu knapp dimensionierter Datenpuffergröße in der Vermittlungseinheit oder bei Ablauf einer von der TCP-Schicht fest vorgegeben Zeitdauer für die Übertragung einer Nachricht bestimmter Größe durch die Schichten unterhalb der TCP-Schicht (timeout) erfolgt die Fehlerbehandlung auf dem zeitintensiveren Weg über die TCP-Schicht, wie sie dem Stand der Technik entspricht. Die Fehlerbehandlung auf der IP-Ebene ersetzt also nicht den sonst üblichen TCP-Mechanismus zur Fehlerbehandlung, sondern ergänzt diesen nur um eine schnellere Variante. Eine negative Beeinflussung des TCP-Mechanismus durch den Fehlerbehandlungsvorgang in der IP-Schicht findet nicht statt.

Ein Ausführungsbeispiel der Erfindung wird nachfolgend unter Bezugnahme auf die Zeichnung näher beschrieben. In der Zeichnung zeigen:
- Fig. 1: eine Überblicksdarstellung des DTT-IP-Systems;
- Fig. 2: eine grobe Systemdarstellung des Übertragungssystems;
- Fig. 3: eine Systemdarstellung für den Fehlerbehandlungsmechanismus nach dem Stand der Technik;
- Fig. 4: eine Systemdarstellung eines erfindungsgemäßen Fehlerbehandlungsmechanismus;
- Fig. 5: eine Realisierungsstruktur eines erfindungsgemäßen Fehlerbehandlungsmechanismus;
- Fig. 6: die Feldstruktur des IP-Headers und
- Fig. 7: ein Flußdiagramm des erfindungsgemäßen Verfahrens.

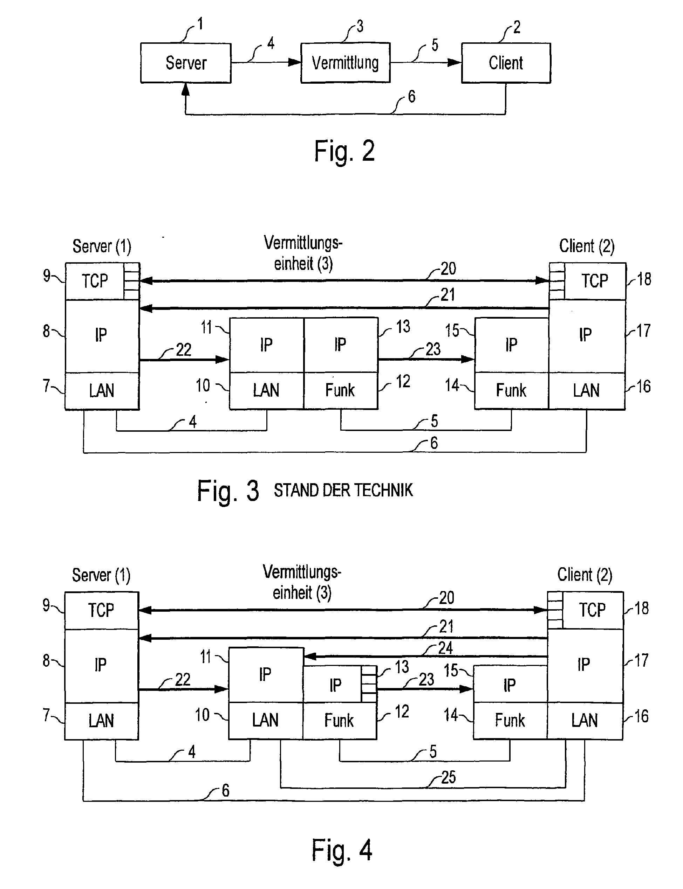

Anhand der Figuren 2 bis 7 wird nachfolgend das erfindungsgemäße System und Verfahren zur Verbesserung des Übertragungsverhaltens einer nach dem TCP/IP-Protokoll arbeitenden Datenübertragung über eine unidirektionale Funkverbindung erläutert.

Das digitale, das Internet unterstützende und nach dem TCP/IP-Protokollstandard arbeitende Übertragungssystem besteht gemäß Fig. 2 aus einem Server 1 und einem Client 2. Der Server 1 sendet auf Anforderung des Clients 1 eine Nachricht an den Client 2. Da die Übertragungsstrecke nicht aus einem einheitlichen Übertragungsmedium besteht, ist auf der Übertragungsstrecke zwischen Server 1 und Client 2 eine Vermittlungseinheit 3 dazwischen geschaltet, die die drahtgebundene, bidirektionale Übertragungsstrecke 4 zwischen Server 1 und Vermittlungseinheit 3 mit der drahtlosen, unidirektionalen Funkübertragungsstrecke 5 zwischen Vermittlungseinheit 3 und Client 2 verbindet. Zum Austausch von zusätzlichen Steuerinformationen vom Client 1 zum Server 2 - z.B. Quittierungssignale vom Client 1 zum Server 2 - ist eine zusätzliche drahtgebundene, bidirektionale Übertragungsstrecke 6 vom Client 1 zum Server 2 vorgesehen.

Zur Realisierung einer digitalen Übertragung nach dem TCP/IP-Protokollstandard sind gemäß Fig. 3 im Stand der Technik beim Server 1, beim Client 2 und bei der Vermittlungseinheit 3 verschiedene Ebenen vorgesehen.

Zur Realisierung einer rein physikalischen Verbindung besitzt der Server 1 als physikalische Ebene eine LAN-Ebene 7, die die drahtgebundene, physikalische Verbindung über das lokale Netzwerk (LAN) mit der LAN-Ebene 10 des Vermittlungsgerätes 3 herstellt. Die Vermittlungseinheit 3 besitzt eine zweite physikalische Ebene 12 (= Funk-Ebene), die die physikalische, drahtlose Funkverbindung mit der dazu korrespondierenden Funk-Ebene 14 des Clients 2 aufbaut. Neben der Funk-Ebene 14 besitzt der Client 2 als weitere physikalische Ebene die LAN-Ebene 16, die mit der LAN-Ebene 7 des Servers 1 zur physikalischen Datenübertragung über die Übertragungsstrecke 6 verbunden ist.

Anstatt LAN kann jede Netzwerk-Technologie verwendet werden, die das TCP/IP-Protokoll unterstützt, z.B. PSTN, ISDN, GSM, GPRS, UMTS.

Als Vermittlungsebene entsprechend dem OSI-Referenzmodell weist der Server 1 oberhalb der physikalischen LAN-Ebene 7 eine IP-Ebene 8 auf, die eine logische Verbindung 22 zur IP-Ebene 11 der Vermittlungseinheit 3 aufbaut. Die IP-Ebene 13 der Vermittlungseinheit 3 ist über eine logische Verbindung 23 mit der IP-Ebene 15 des Clients 2 verbunden. Schließlich besteht eine logische Verbindung 21 zwischen einer zweiten IP-Ebene 17 des Clients 2 und der IP-Ebene 8 des Servers 1.

Oberhalb der Vermittlungsebene ist gemäß dem OSI-Referenzmodell zwischen den als Kommunikationspartner wirkenden Server 1 und Client 2 eine Transportebene vorgesehen. Hierzu weist der Server 1 oberhalb der IP-Ebene 8 eine TCP-Ebene 9 auf, die eine logische Verbindung 20 zur TCP-Ebene 18 des Clients 2 herstellt.

Während auf der physikalischen Ebene der reine physikalische Datentransport zwischen den einzelnen an der Datenübertragung beteiligten Kommunikationspartnern Server 1, Client 2 und Vermittlungseinheit 3 stattfindet, dient die Vermittlungsebene primär dem Aufbau einer optimalen Verbindung zwischen den beiden Kommunikationspartnern Server 1 und Client 2. Neben der Suche nach einer optimalen Kommunikationsverbindung zwischen zwei Kommunikationspartnern, die im Vergleich zur in Fig. 3 dargestellten Datenübertragungsstruktur, bei der die Verbindung zwischen Server 1 und Client 2 durch die Zwischenschaltung einer Vermittlungseinheit 3 eindeutig geregelt ist, i.a. recht kompliziert ist, werden in der Vermittlungsebene weitere Aufgaben durchgeführt, wie die Segmentierung der zu übertragenden Nachricht in Datenpakete, die Erkennung von Datenübertragungsfehlern und andere vermittlungsspezifische Aufgaben der Datenübertragung.

Alle der Vermittlungsebene zugeordneten Aufgaben werden in der Datenübertragungsstruktur nach Fig. 3 nach dem Internet-Protocol-Standard (IP-Standard) durchgeführt. Auf der zur Vermittlungsebene nächst höheren Transportebene erfolgt primär die Überwachung der logischen Verbindung zwischen den Kommunikationsendpartnern Server 1 und Client 2. Dazu zählen vor allem der Aufbau der Kommunikationsverbindung, die Verwaltung der Datenübertragung incl. der Fehlerbehandlung und der Abbau der Kommunikationsverbindung. Die Aufgaben der Transportebene werden nach dem Transport-Control-Protocol-Standard (TCP-Standard) durchgeführt.

Tritt ein Datenübertragungsfehler - ein verloren gegangenes Datenpaket oder ein fehlerhaft übertragenes Datenpaket - auf der Funkverbindung 5 zwischen der Vermittlungseinheit 3 und dem Client 2 in dem den Stand der Technik kennzeichnenden Übertragungssystem gemäß Fig. 3 auf, so wird dieser Übertragungsfehler in der IP-Ebene 15 des Clients 2 erkannt und von der IP-Ebene 15 auch an die TCP-Ebene 18 gemeldet. Wird der korrekte Empfang eines bestimmten Datenpaketes von der IP-Ebene 15 nicht innerhalb einer fest von der TCP-Ebene 18 vorgegebenen Überwachungszeitspanne (timeout) gemeldet, so signalisiert die TCP-Ebene 18 des Clients 2 über die logische Verbindung 20 der TCP-Ebene 9 des Servers 1 eine fehlerhafte Übertragung der übertragenen Nachricht. Die Behandlung des Übertragungsfehlers erfolgt also nicht frühestmöglich mit Erkennung der fehlgeschlagenen Übertragung des Datenpaketes in der IP-Ebene 15 des Clients 2, sondern erst zeitverzögert nach Ablauf der fest vorgegebenen Überwachungszeitspanne (timeout) durch die TCP-Ebene 18 des Clients 2. Die fest vorgegebene Überwachungszeitspanne (timeout) zur Erkennung von fehlgeschlagener Übertragung beim Verfahren nach TCP muß eingehalten werden, da die Reihenfolge des Empfangs der einzelnen Datenpakete nicht vorhersagbar ist.

Nach der Signalisierung der fehlerhaften Übertragung der Nachricht auf der TCP-Ebene über die logische TCP-Verbindung 20 werden im Rahmen der Fehlerbehandlung die einzelnen Ebenen sukzessive durchlaufen. In der IP-Ebene erfolgt im nächsten Schritt die Signalisierung des verloren gegangen oder fehlerhaft übertragenen Datenpaketes durch die IP-Ebene 17 des Clients 2 über die logische IP-Verbindung 21 an die IP-Ebene 8 des Servers 1. Diese Signalisierung wird physikalisch von der physikalischen LAN-Ebene 16 des Clients 2 über die physikalische, drahtgebundene, bidirektionale Übertragungsstrecke 6 an die physikalische LAN-Ebene 7 des Servers 1 gesendet. Im Server 1 durchläuft diese Signalisierung der fehlerhaften Datenübertragung wieder alle Ebenen von unten nach oben.

Ist die Signalisierung der fehlerhaften Datenübertragung auf der TCP-Ebene 9 des Servers 1 angelangt, so quittiert diese über die logische TCP-Verbindung 20 der TCP-Ebene 18 des Clients 2 die wiederholte Übertragung der fehlgeschlagenen Nachrichtenübertragung. Daraufhin quittiert die IP-Ebene 8 des Servers 1 der IP-Ebene 15 des Clients 2 die wiederholte Übertragung des fehlgeschlagenen Datenpaketes über die logische IP-Verbindung 22 zwischen Server 1 und Vermittlungseinheit 3, die dazwischen geschalteten IP-Ebenen 11 und 13 der Vermittlungseinheit 3 und die logische IP-Verbindung 23 zwischen Vermittlungseinheit 3 und Client 2. Schließlich wird das verloren gegangene oder falsch übertragene Datenpaket von der physikalischen LAN-Ebene 7 des Servers 1 über die drahtgebundene, bidirektionale Übertragungsstrecke 4 zwischen Server 1 und Vermittlungseinheit 3, die dazwischen geschaltete physikalische LAN-Ebene 10 und Funk-Ebene 12 der Vermittlungseinheit 3 und die drahtlose, unidirektionale Funkübertragungsstrecke 5 zwischen Vermittlungseinheit 3 und Client 2 an die physikalische Funk-Ebene 14 des Clients 2 übertragen.

Aufbauend auf dem den Stand der Technik kennzeichnenden Übertragungssystem gemäß Fig. 3 wird in dem erfindungsgemäßen Übertragungssystem, wie in Fig. 4 dargestellt, bei einem in der drahtlosen, unidirektionalen Funkübertragungsstrecke 5 auftretenden Verlust eines Datenpaketes oder einer Fehlübertragung eines Datenpaketes und einer Fehlererkennung in der IP-Ebene 15 des Clients 2 die Fehlerbehandlung bereits auf der IP-Ebene des Clients 2 durchgeführt. Dazu wird von der IP-Ebene 17 des Clients 2 der IP-Ebene 11 der Vermittlungseinheit 3 über die neu geschaffene, logische IP-Verbindung 24 die fehlerhafte Übertragung des Datenpaketes signalisiert. Die physikalische Übertragung dieser Signalisierung erfolgt von der physikalischen LAN-Ebene 16 des Clients über die neu geschaffene drahtgebundene, bidirektionale Übertragungsstrecke 25 zur physikalischen LAN-Ebene 10 der Vermittlungseinheit 3. Die IP-Ebene 13 der Vermittlungseinheit 3 meldet der IP-Ebene 15 des Clients 2 über die logische IP-Verbindung 23 die wiederholte Übertragung des verloren gegangenen oder falsch übertragenen Datenpaketes. Die wiederholte Übertragung des Datenpaketes erfolgt durch die physikalische Funk-Ebene 12 über die physikalische, drahtlose, unidirektionale Funkübertragungsstrecke 5 zur physikalischen Funk-Ebene 14 des Clients 2.

Zur Realisierung des erfindungsgemäßen Fehlerbehandlungsmechanismus auf IP-Ebene werden ergänzend zu den funktionalen Einheiten des den Stand der Technik kennzeichnenden Datenübertragungssystems gemäß Fig. 3 zusätzliche Einheiten benötigt. Zur Identifizierung eines Datenübertragungsfehlers der drahtlosen, unidirektionalen Funkübertragungsstrecke 5 auf IP-Ebene enthält die IP-Ebene 15 des Clients 2 eine Identifizierungseinheit 30 (lost detector).

Die Vermittlungseinheit 3 enthält zur temporären Speicherung der zuletzt abgeschickten Datenpakete im Hinblick auf eine wiederholte Übertragung der auf der drahtlosen, unidirektionalen Funkübertragungsstrecke 5 verloren gegangenen oder falsch übertragenen Datenpakete für jeden von der Vermittlungseinheit 3 zu bedienenden Client A, B, C usw. jeweils einen zyklischen Datenpuffer 32 mit einer bestimmten Datenpuffergröße.

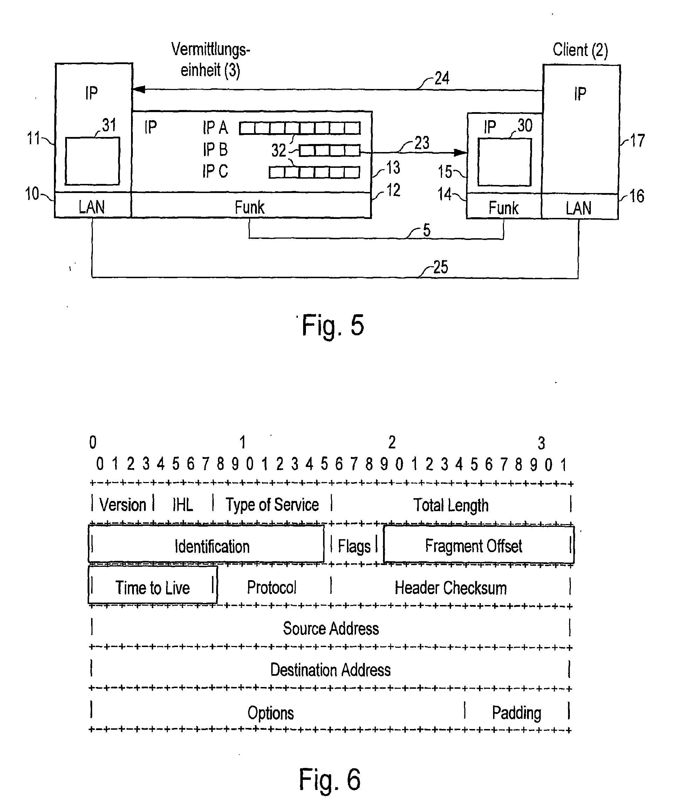

Die Vermittlungseinheit 3 enthält schließlich noch, wie in Fig. 5 dargestellt, auf der IP-Ebene 11 zur Auswahl der für eine wiederholte Übertragung auf der drahtlosen, unidirektionalen Funkübertragungsstrecke 5 bestimmten Datenpakete eine Speicherverwaltungseinheit 31 (logic unit). Diese Speicherverwaltungseinheit 31 in der IP-Ebene 11 der Vermittlungseinheit übernimmt auch die Funktion der Abspeicherung der vom Server 1 erhaltenen und für die Datenübertragung auf der drahtlosen, unidirektionalen Funkübertragungsstrecke 5 bestimmten Datenpakete im jeweiligen zyklischen Datenpuffer 32. Die Abspeicherung im jeweils richtigen zyklischen Datenpuffer erfolgt anhand der zum jeweiligen Ziel-Client gehörenden IP-Adresse IP_A, IP_B, IP_C des abzuspeichernden Datenpaketes.

Die Feldstruktur des IP-Headers ist in Fig. 6 dargestellt.

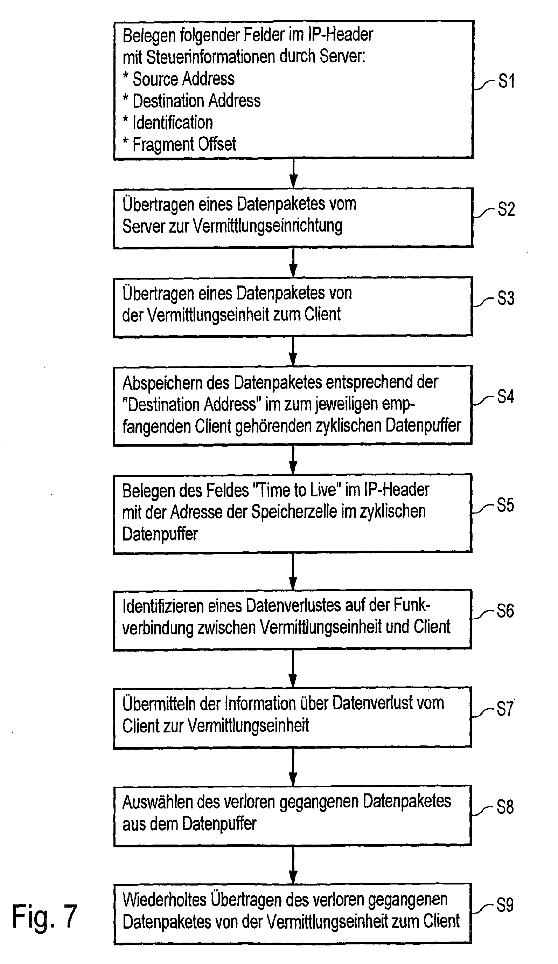

Das Verfahren zur Verbesserung des Übertragungsverhaltens einer nach dem TCP/IP-Protokoll arbeitenden Datenübertragung über eine unidirektionale Funkverbindung enthält die in Fig. 7 dargestellten Verfahrensschritte.

Im ersten Verfahrensschritt S1 werden von der IP-Ebene 8 des Servers 1 die für die Übertragung eines Datenpaketes vom Server 1 zum Client 2 relevanten Steuerinformationen im als Steuerdatenfeld dienenden IP-Header des zu versendenden Datenpaketes abgespeichert. Die für die Identifizierung des Datenpaketes bei der Übertragung relevanten Steuerinformationen sind die Absenderadresse (source address) des absendenden Servers 1, die Zieladresse (destination address) des empfangenden Clients 2 und die für die Zugehörigkeit des Datenpaketes zu einer Nachricht relevante Kennung der Nachricht (identification). Entsprechend der in Fig. 6 dargestellten Feldstruktur des IP-Headers werden die Steuerinformationen im IP-Header des Datenpaketes abgespeichert.

Nach der Belegung der Steuerinformationen im IP-Header des Datenpaketes im Verfahrensschritt S1 und aller übrigen in den einzelnen Ebenen des Servers 1 nach dem TCP/IP-Protokoll-Standard erforderlichen Prozessschritte zur Vorbereitung der Datenübertragung, wie oben dargestellt, erfolgt in Verfahrensschritt S2 die Datenübertragung über die drahtgebundene, bidirektionale Übertragungsstrecke 4 zwischen Server 1 und Vermittlungseinrichtung 3.

Nach Empfang des Datenpaketes in der Vermittlungseinrichtung 3 wird das Datenpaket im nächsten Verfahrensschritt S3 über die drahtlose, unidirektionale Funkübertragungsstrecke von der Vermittlungseinrichtung 3 zum Client 2 übertragen.

Entsprechend seiner Reihenfolge bei der Absendung von der Vermittlungseinrichtung 3 und entsprechend der Zieladresse (destination address) des das Datenpaket empfangenden Clients 2 wird das Datenpaket im Verfahrensschritt S4 durch die Speicherverwaltungseinheit 31 in die nächst zu belegende Speicherzelle des jeweiligen zyklischen Datenpuffers 32 abgespeichert.

Da gleichzeitig mehrere TCP-Verbindungen zu einem bestimmten Client 2 bestehen können, wird die Adresse der Speicherzelle innerhalb des zyklischen Datenpuffers 32, in die das Datenpaket abgespeichert wurde, als zusätzliche Information zur eindeutigen Identifizierung verwendet. Diese Adresse der Speicherzelle im zyklischen Datenpuffer 32 wird als zusätzliche Steuerinformation im Verfahrensschritt S5 beispielhaft in das Feld "Time to live" des IP-Headers von der Speicherverwaltungseinheit 31 der Vermittlungseinheit 3 geschrieben.

Nach Empfang des Datenpaketes im Client 2 wird zusätzlich zu den in den einzelnen Ebenen des Clients 2 nach dem TCP/IP-Protokoll-Standard erforderlichen Prozessschritten zur Nachbereitung der Datenübertragung, wie oben dargestellt, im Verfahrensschritt S6 durch die eine Identifizierungseinheit 30 ein verloren gegangenes oder falsch übertragenes Datenpaket entdeckt. Hierzu bedient sich die Identifizierungseinheit 30 der im IP-Header der Datenpakete abgelegten Adresse der das Datenpaket beinhaltenden Speicherzelle im zyklischen Datenpuffer 32.

Im Falle eines verloren gegangenen oder falsch übertragenen Datenpaketes meldet die Identifizierungseinheit 30 des Clients 2 über die drahtgebundene, bidirektionale Übertragungsstrecke 25 der Vermittlungseinheit 3 im Verfahrensschritt S7 diesen Datenverlust. Dazu wird vor allem die im IP-Header des Datenpakets abgelegte Adresse der das Datenpaket beinhaltenden Speicherzelle im zyklischen Datenpuffer 32 übertragen.

Anhand der in Verfahrensschritt S7 übertragenen Informationen (Zieladresse des empfangenden Clients 2, Adresse der Speicherzelle im zyklischen Datenpuffer 32) wählt die Speicherverwaltungseinheit 31 das wiederholt zu übertragende Datenpaket aus dem zyklischen Datenpuffer 32 im Verfahrensschritt S8 aus.

Das in Verfahrensschritt S8 aus dem zyklischen Datenpuffer 32 durch die Einheit zur Auswahl der für die wiederholte Übertragung ausgewählte Datenpaket 31 wird im Verfahrensschritt S9 über die drahtlose, unidirektionale Funkübertragungsstrecke 5 von der Vermittlungseinheit 3 zum Client 2 wiederholt übertragen.

## Patentansprüche

1. System zur Datenübertragung von zumindest einem nach dem TCP/IP-Protokoll arbeitenden Server (1) über eine drahtgebundene Verbindung (4) zu einer Vermittlungseinheit (3) und von dieser Vermittlungseinheit (3) über eine unidirektionale Funkverbindung (5) zu zumindest einem nach dem TCP/IP-Protokoll arbeitenden Client (2), **dadurch gekennzeichnet, daß** Mittel vorgesehen sind, die derart ausgestaltet sind daß bei einem Übertragungsverlust zumindest eines Datenpaketes in einer unidirektionalen Funkverbindung (5) eine zusätzliche temporäre Verbindung (24) zwischen dem Client und der Vermittlungseinheit auf der IP-Ebene zu einer wiederholten Übertragung des zumindest einen auf der unidirektionalen Funkverbindung (5) verloren gegangenen Datenpaketes aufgebaut wird.

2. System nach Anspruch 1,
**dadurch gekennzeichnet,**
**daß** zur Durchführung der wiederholten Übertragung des zumindest einen auf der Funkverbindung (5) verloren gegangenen Datenpaketes im Client (2) eine Identifizierungseinheit (30) zur Erkennung des Verlustes des Datenpaketes in der Funkverbindung und in der Vermittlungseinheit eine Speicherverwaltungseinheit (31) zur Auswahl des für die wiederholte Übertragung bestimmten Datenpaketes vorgesehen sind.

3. System nach Anspruch 1 oder 2,
**dadurch gekennzeichnet,**
**daß** die Identifizierungseinheit (30) derart ausgestaltet ist, daß sie auf vom Client (2) empfangene und abgespeicherte Datenpakete zugreift.

4. System nach Anspruch 1 oder 2,
**dadurch gekennzeichnet,**
**daß** die Speicherverwaltungseinheit (31) derart ausgestaltet ist, daß sie die Auswahl des Datenpaketes in für jede Funkverbindung jeweils vorgesehenen, zyklisch mit den zu übertragenden Datenpaketen beschriebenen Datenpuffern (32) durchführt.

5. System nach Anspruch 1,
**dadurch gekennzeichnet,**
**daß** zur Durchführung der wiederholten Übertragung des zumindest einen auf der Funkverbindung (5) verloren gegangenen Datenpaketes zwischen der Identifizierungseinheit (30) und der Speicherverwaltungseinheit (31) Steuerinformationen in einem Steuerdatenbereich jedes Datenpaketes hinterlegt sind.

6. System nach Anspruch 5,
**dadurch gekennzeichnet,**
**daß** der Steuerdatenbereich des Datenpakets der IP-Header ist.

7. System nach Anspruch 6,
**dadurch gekennzeichnet,**
**daß** die für die eindeutige Identifizierung jedes Datenpaketes nötigen Steuerinformationen aus folgenden Informationen bestehen:
- eine Adresse des absendenden Servers (1),
- eine Adresse des empfangenden Clients (2),
- eine Kennung für eine übertragene Nachricht zwischen dem absendenden Server (1) und dem empfangenden Client (2),
- eine Adresse des Datenpakets im zyklischen Datenpuffer (32) der Vermittlungseinrichtung (3).

8. System nach Anspruch 7,
**dadurch gekennzeichnet,**
**daß** die Adresse des absendenden Servers (1) im Feld "Source Address" des IP-Headers abgelegt ist.

9. System nach Anspruch 7 oder 8,
**dadurch gekennzeichnet,**
**daß** die Adresse des empfangenden Clients (2) im Feld "Destination Address" des IP-Headers abgelegt ist.

10. System nach einem der Ansprüche 7 bis 9,
**dadurch gekennzeichnet,**
**daß** die Kennung für die übertragene Nachricht zwischen dem absendenden Server (1) und dem empfangenden Client (2) im Feld "Identification" des IP-Headers abgelegt ist.

11. System nach einem der Ansprüche 7 bis 10,
**dadurch gekennzeichnet,**
**daß** die Adresse des Datenpakets im zyklischen Datenpuffer (32) der Vermittlungseinrichtung (3) im Feld "Time to Live" des IP-Headers abgelegt ist.

12. Verfahren zur nach dem TCP/IP-Protokoll arbeitenden Datenübertragung, die aus einer drahtgebundenen Verbindung (4) und einer über eine Vermittlungseinrichtung (3) daran gekoppelten unidirektionalen Funkverbindung (5) besteht, mit folgenden Verfahrensschritten:
- Belegen (S1) von bestimmten Steuerdatenfeldern in einem zu übertragenden Datenpaket mit den für eine Identifizierung des Datenpaketes nötigen Steuerinformationen durch einen das Datenpaket absendenden Server (1),
- Übertragen (S2) des Datenpaketes vom Server (1) zur Vermittlungseinheit (3) über eine drahtgebundene Verbindung (4),
- Übertragen (S3) des Datenpakets von der Vermittlungseinheit (3) zum Client (2) über eine Funkverbindung (5),
- Abspeichern (S4) des Datenpakets in einer Datenzelle eines zyklischen Datenpuffers (32) der Vermittlungseinrichtung (3), der zu einem das Datenpaket empfangenden Client (2) gehört,
- Belegen (S5) eines bestimmten Steuerdatenfeldes des zu übertragenden Datenpaketes mit der Adresse der Datenzelle,
- Identifizieren (S6) eines Verlustes zumindest eines Datenpaketes auf der Funkverbindung (5) durch den das Datenpaket empfangenden Client (2),
- Übermitteln (S7) einer Information über den Verlust zumindest eines Datenpaketes vom Client (2) an die Vermittlungseinheit (3),
- Auswählen (S8) des verloren gegangenen Datenpakets aus dem zyklischen Datenpuffer (32) durch die Vermittlungseinheit (3) und
- wiederholtes Übertragen (S9) des zumindest einen verloren gegangenen Datenpakets von der Vermittlungseinheit (3) zum Client (2) über die Funkverbindung (5).

13. Verfahren nach Anspruch 12,
**dadurch gekennzeichnet,**
**daß** die zur Identifizierung des Datenpaketes nötigen Steuerinformationen folgende Informationen sind:
- eine Adresse des absendenden Servers (1),
- eine Adresse des empfangenden Clients (2),
- eine Kennung für eine übertragene Nachricht zwischen dem absendenden Server (1) und dem empfangenden Client (3).

14. Verfahren nach Anspruch 13,
**dadurch gekennzeichnet,**
**daß** die für die Identifizierung des Datenpaketes nötigen Steuerinformationen in folgenden Steuerdatenfeldern durch den Server (1) abgespeichert werden:
- die Adresse des absendenden Servers (1) wird im Feld "Source Address" des zu übertragenden Datenpaketes abgespeichert,
- die Adresse des empfangenden Clients (2) wird im Feld "Destination Address" des zu übertragenden Datenpaketes abgespeichert,
- die Kennung für die übertragene Nachricht zwischen dem absendenden Server (1) und dem empfangenden Client (2) wird im Feld "Identification" des zu übertragenden Datenpaketes abgespeichert.

15. Verfahren nach Anspruch 12,
**dadurch gekennzeichnet,**
**daß** das Abspeichern des zu übertragenden Datenpaketes anhand der Adresse des empfangenden Clients (2) in der nächsten zu beschreibenden Datenzelle des jeweiligen zyklischen Datenpuffers (32) durch die Vermittlungseinrichtung (3) erfolgt.

16. Verfahren nach Anspruch 15,
**dadurch gekennzeichnet,**
**daß** die Adresse der mit dem zu übertragenden Datenpaket beschriebenen Datenzelle im zyklischen Datenpuffer (32) in das Feld "Time to live" des zu übertragenden Datenpaketes von der Vermittlungseinrichtung (3) geschrieben wird.

17. Verfahren nach Anspruch 12 oder 16,
**dadurch gekennzeichnet,**
**daß** das Identifizieren eines Verlustes eines Datenpaketes auf der Funkverbindung (5) im Client (2) anhand der in den Steuerdatenfeldern des Datenpaketes abgelegten Steuerinformationen durch eine Identifizierungseinheit (30) des Clients (2) erfolgt.

18. Verfahren nach Anspruch 12, 16 oder 17,
**dadurch gekennzeichnet,**
**daß** die Information über den Verlust eines Datenpaketes auf der Funkverbindung (5), die vom Client (2) an die Vermittlungseinheit (3) über eine zusätzliche, der Funkverbindung entgegengesetzt gerichtete Verbindung (25) gesendet wird, die Adresse der das verloren gegangene Datenpaket speichernde Pufferzelle des zyklischen Datenpuffers (32) und die Adresse des Clients (2) enthält.

19. Verfahren nach Anspruch 12, 16, 17 oder 18,
**dadurch gekennzeichnet,**
**daß** das Auswählen des verloren gegangenen Datenpaketes aus dem zyklischen Datenpuffer (32) durch die Speicherverwaltungseinheit (31) anhand der Adresse des Clients (2) zur Auswahl des richtigen zyklischen Datenpuffers (32) und der Adresse der das verloren gegangene Datenpaket speichernden Pufferzelle innerhalb des zyklischen Datenpuffers (32) erfolgt.

## Claims

1. System for data transmission from at least one server (1) operating according to the TCP/IP protocol via a wired connection (4) to a network unit (3) and from this network unit (3) via a uni-directional radio connection (5) to at least one client (2) operating according to the TCP/IP protocol,
**characterised in that**
means are provided, which are designed in such a manner that, in the event of a transmission loss of at least one data packet in a uni-directional radio connection (5), an additional temporary connection (24) is established between the client and the network unit at the IP level for a re-transmission of the at least one data packet lost on the uni-directional radio connection (5).

2. System according to claim 1,
**characterised in that**,
in order to implement the re-transmission of the at least one data packet lost in the radio connection (5), a loss-detector unit (30) is provided in the client (2) in order to identify the loss of the data packet in the radio connection, and respectively a memory-management unit (31) is provided in the network unit in order to select the data packet determined for re-transmission.

3. System according to claim 1 or 2
**characterised in that**
the loss-detector unit (30) is designed in such a manner that it has access to data packets received and stored by the client (2).

4. System according to claim 1 or 2
**characterised in that**
the memory-management unit (31) is designed in such a manner that it implements the selection of the data packet in data buffers (32) provided for each radio connection, in which the data packets to be transmitted are written in a cyclical manner.

5. System according to claim 1
**characterised in that**
control information is deposited in a control-data region of each data packet for the implementation of the re-transmission of the at least one data packet lost in the radio connection (5) between the loss-detector unit (30) and the memory-management unit (31).

6. System according to claim 5,
**characterised in that**
the control-data region of the data packet is the IP header.

7. System according to claim 6,
**characterised in that**
the control information necessary for the unambiguous identification of each data packet consists of the following items of information:
- an address of the sending server (1),
- an address of the receiving client (2),
- an identifier for a transmitted message between the sending server (1) and the receiving client (2),
- an address of the data packet in the cyclical data buffer (32) of the network device (3).

8. System according to claim 7,
**characterised in that**
the address of the sending server (1) is deposited in the "source address" field of the IP header.

9. System according to claim 7 or 8,
**characterised in that**
the address of the receiving client (2) is deposited in the "destination address" field of the IP header.

10. System according to any one of claims 7 to 9,
**characterised in that**
the identifier for the transmitted message between the sending server (1) and the receiving client (2) is deposited in the "identification" field of the IP header.

11. System according to any one of claims 7 to 10,
**characterised in that**
the address of the data packet in the cyclical data buffer (32) of the network device (3) is deposited in the "time to live" field of the IP header.

12. Method for data transmission operating according to the TCP/IP protocol, which consists of a wired connection (4) and a uni-directional radio connection (5) coupled to the latter via a network device (3), with the following procedural stages:
- definition (S1) of given control-data fields in a data packet to be transmitted with the control information necessary for an identification of the data packet by a server (1) sending the data packet,
- transmission (S2) of the data packet from the server (1) to the network unit (3) via a wired connection (4),
- transmission (S3) of the data packet from the network unit (3) to the client (2) via a radio connection (5),
- storage (S4) of the data packet in a data cell of a cyclical data buffer (32) of the network device (3), which is associated with a client (2) receiving the data packet,
- definition (S5) of a given control-data field of the data packet to be transmitted with the address of the data cell,
- identification (S6) of a loss of at least one data packet on the radio connection (5) by the client (2) receiving the data packet,
- communication (S7) of an item of information regarding the loss of at least one data packet by the client (2) to the network unit (3),
- selection (S8) of the lost data packet from the cyclical data buffer (32) by the network unit (3) and
- re-transmission (S9) of the at least one lost data packet from the network unit (3) to the client (2) via the radio connection (5).

13. Method and according to claim 12,
**characterised in that**
the control information necessary for the identification of the data packet comprises the following items of information:
- an address of the sending server (1)
- an address of the receiving client (2),
- an identifier for a transmitted message between the sending server (1) and the receiving client (3).

14. Method according to claim 13,
**characterised in that**
the items of control information necessary for the identification of the data packet are stored in the following control-data fields by the server (1):
- the address of the sending server (1) is stored in the "source address" field of the data packet to be transmitted,
- the address of the receiving client (2) is stored in the "destination address" field of the data packet to be transmitted,
- the identifier for the transmitted message between the sending server (1) and the receiving client (2) is stored in the "identification" field of the data packet to be transmitted.

15. Method according to claim 12,
**characterised in that**
the data packet to be transmitted is stored with reference to the address of the receiving client (2) in the next data cell of the respective cyclical data buffer (32) to be written by the network device (3).

16. Method according to claim 15,
**characterised in that**
the address of the data cell written with the data packet to be transmitted in the cyclical data buffer (32) is written in the "time to live" field of the data packet to be transmitted by the network device (3).

17. Method according to claim 12 or 16,
**characterised in that**
a loss of a data packet in the radio connection (5) in the client (2) is identified by the loss-detector unit (30) of the client (2) with reference to the items of control information stored in the control-data fields of the data packet.

18. Method according to claim 12, 16 or 17,
**characterised in that**
the information regarding the loss of a data packet on the radio connection (5), which is transmitted from the client (2) to the network device (3) via an additional connection (25) directed in the opposite direction to the radio connection, contains the address of the buffer cell of the cyclical data buffer (32) storing the lost data packet (32) and the address of the client (2).

19. Method according to claim 12, 16, 17 or 18,
**characterised in that**
the lost data packet from the cyclical data buffer (32) is selected by the memory-management unit (31) with reference to the address of the client (2) for the selection of the correct cyclical data buffer (32) and with reference to the address of the buffer cell storing the lost data packet within the cyclical data buffer (32).

## Revendications

1. Système pour la transmission de données d'au moins un serveur (1) travaillant selon le protocole TCP/IP par une liaison (4) filaire à une unité de commutation (3) et de cette unité de commutation (3) par une liaison radio (5) unidirectionnelle à au moins un client (2) travaillant selon le protocole TCP/IP, **caractérisé en ce qu'**il est prévu des moyens qui sont équipés de telle sorte que, lors d'une perte de transmission d'au moins un paquet de données dans une liaison radio (5) unidirectionnelle, une liaison (24) temporaire supplémentaire est établie entre le client et l'unité de commutation au niveau IP pour une transmission répétée du au moins un paquet de données perdu sur la liaison radio (5) unidirectionnelle.

2. Système selon la revendication 1,
**caractérisé en ce que**,
pour la réalisation de la transmission répétée du au moins un paquet de données perdu lors de la liaison radio (5), il est prévu chez le client (2) une unité d'identification (30) pour la détection de la perte du paquet de données dans la liaison radio et dans l'unité de commutation une unité de gestion de mémoire (31) pour la sélection du paquet de données destiné à la transmission répétée.

3. Système selon la revendication 1 ou 2,
**caractérisé en ce que**
l'unité d'identification (30) est conçue de telle sorte qu'elle a recourt à des paquets de données reçus du client (2) et stockés.

4. Système selon la revendication 1 ou 2,
**caractérisé en ce que**
l'unité de gestion de mémoire (31) est conçue de telle sorte qu'elle effectue la sélection du paquet de données dans des tampons de données prévus pour chaque liaison radio et exploités de façon cyclique avec les paquets de données (32) à transmettre.

5. Système selon la revendication 1,
**caractérisé en ce que**,
pour la réalisation de la transmission répétée du au moins un paquet de données perdu lors de la liaison radio (5) entre l'unité d'identification (30) et l'unité de gestion de mémoire (31), des informations de commande sont déposées dans une zone de données de commande de chaque paquet de données.

6. Système selon la revendication 5,
**caractérisé en ce que**
la zone de données de commande du paquet de données est l'en-tête IP.

7. Système selon la revendication 6,
**caractérisé en ce que**
les informations de commande utiles pour l'identification claire de chaque paquet de données se composent des informations suivantes:
- une adresse du serveur (1) expéditeur,
- une adresse du client (2) destinataire,
- un code pour un message transmis entre le serveur (1) expéditeur et le client (2) destinataire,
- une adresse du paquet de données dans le tampon de données (32) cyclique du dispositif de commutation (3).

8. Système selon la revendication 7,
**caractérisé en ce que**
l'adresse du serveur (1) expéditeur est déposée dans le champ "Source address" de l'en-tête IP.

9. Système selon la revendication 7 ou 8,
**caractérisé en ce que**
l'adresse du client (2) destinataire est déposée dans le champ "Destination Address" de l'en-tête IP.

10. Système selon l'une quelconque des revendications 7 à 9,
**caractérisé en ce que**
le code pour le message transmis entre le serveur (1) expéditeur et le client (2) destinataire est déposé dans le champ "Identification" de l'en-tête IP.

11. Système selon l'une quelconque des revendications 7 à 10,
**caractérisé en ce que**
l'adresse du paquet de données dans le tampon de données (32) cyclique du dispositif de commutation (3) est déposée dans le champ "Time to Live" de l'en-tête IP.

12. Procédé pour la transmission de données travaillant selon le protocole TCP/IP, qui comprend une liaison (4) filaire et une liaison radio (5) unidirectionnelle couplée par un dispositif de commutation (3) à cette liaison, comprenant les étapes de procédé suivantes:
- occupation (S1) de certains champs de données de commande dans un paquet de données à transmettre avec les informations de commande utiles pour une identification du paquet de données par un serveur (1) envoyant le paquet de données,
- transmission (S2) du paquet de données du serveur (1) à l'unité de commutation (3) via une liaison (4) filaire,
- transmission (S3) du paquet de données de l'unité de commutation (3) au client (2) via une liaison radio (5),
- stockage (S4) du paquet de données dans une cellule de données d'un tampon de données (32) cyclique du dispositif de commutation (3), qui appartient à un client (2) recevant le paquet de données,
- occupation (S5) d'un champ défini de données de commande du paquet de données à transmettre avec l'adresse de la cellule de données,
- identification (S6) d'une perte d'au moins un paquet de données sur la liaison radio (5) par le client (2) recevant le paquet de données,
- transmission (S7) d'une information sur la perte d'au moins un paquet de données du client (2) à l'unité de commutation (3),
- sélection (S8) du paquet de données perdu dans le tampon de données (32) cyclique par l'unité de commutation (3) et
- transmission répétée (S9) du au moins un paquet de données perdu de l'unité de transmission (3) au client (2) via la liaison radio (5).

13. Procédé selon la revendication 12,
**caractérisé en ce que**
les informations de commande utiles pour l'identification du paquet de données sont les informations suivantes:
- une adresse du serveur (1) expéditeur,
- une adresse du client (2) destinataire,
- un code pour un message transmis entre le client (1) expéditeur et le client (3) destinataire.

14. Procédé selon la revendication 13,
**caractérisé en ce que**
les informations de commande utiles pour l'identification du paquet de données sont stockées dans les champs suivants de données de commande par le serveur (1):
- l'adresse du serveur (1) expéditeur est stockée dans le champ "Source Address" du paquet de données à transmettre,
- l'adresse du client (2) destinataire est stockée dans le champ "Destination Address" du paquet de données à transmettre,
- le code pour le message transmis entre le serveur (1) expéditeur et le client (2) destinataire est stocké dans le champ "Identification" du paquet de données à transmettre.

15. Procédé selon la revendication 12,
**caractérisé en ce que**
le stockage du paquet de données à transmettre s'effectue à l'aide de l'adresse du client (2) destinataire dans la prochaine cellule de données à décrire du tampon de données (32) cyclique respectif par le dispositif de commutation (3).

16. Procédé selon la revendication 15,
**caractérisé en ce que**
l'adresse de la cellule de données décrite avec le paquet de données à transmettre est écrite dans le tampon de données (32) cyclique dans le champ "Time to live" du paquet de données à transmettre par le dispositif de commutation (3).

17. Procédé selon la revendication 12 ou 16,
**caractérisé en ce que**
l'identification d'une perte d'un paquet de données lors de la liaison radio (5) s'effectue chez le client (2) à l'aide des informations de commande déposées dans les champs de données de commande du paquet de données par une unité d'identification (30) du client (2).

18. Procédé selon la revendication 12, 16 ou 17,
**caractérisé en ce que**
l'information concernant la perte d'un paquet de données lors de la liaison radio (5), qui est envoyée du client (2) à l'unité de commutation (3) via une liaison (25) supplémentaire, dirigée dans le sens opposé à la liaison radio, contient l'adresse de la cellule tampon, mémorisant le paquet de données perdu, du tampon de données (32) cyclique et l'adresse du client (2).

19. Procédé selon la revendication 12, 16, 17 ou 18,
**caractérisé en ce que**
la sélection du paquet de données perdu dans le tampon de données (32) cyclique s'effectue par l'unité de gestion de mémoire (31) à l'aide de l'adresse du client (2) pour la sélection du tampon de données (32) cyclique correct et de l'adresse de la cellule tampon mémorisant le paquet de données perdu à l'intérieur du tampon de données (32) cyclique.
